# EUROPEAN PATENT SPECIFICATION

(11) **EP 4 040 339 B1**
(45) Date of publication and mention of the grant of the patent: **02.09.2026**
(21) Application number: 22155294.6
(22) Date of filing: 04.02.2022
(51) Int. Cl.: G06N 3/04, G06N 3/08, G06N 3/082, G06N 3/084, G06N 3/044, G06N 3/045, G06N 3/048, G06N 3/0455, G06N 3/0464, G06N 3/0495, G06N 3/063

(54) **SPARSE ATTENTION NEURAL NETWORKS**
NEURONALE NETZWERKE MIT SPÄRLICHER AUFMERKSAMKEIT
RÉSEAUX NEURONAUX D'ATTENTION ÉPARS

(30) Priority: 05.02.2021 US 202163146551 P
(43) Date of publication of application: 10.08.2022
(73) Proprietor: Google LLC, Mountain View, CA 94043 (US)
(72) Inventor: Chowdhery, Aakanksha, Mountain View, 94043 (US); Mohiuddin, Afroz, Mountain View, 94043 (US); Michalewski, Henryk, Mountain View, 94043 (US); Kanerva, Jonni Miikka, Mountain View, 94043 (US); Kaiser, Lukasz Mieczyslaw, Mountain View, 94043 (US); Jaszczur, Sebastian Dariusz, Mountain View, 94043 (US); Gajewski, Wojciech, Mountain View, 94043 (US)
(74) Representative: Marks & Clerk GST

(56) References cited:
- HANRUI WANG ET AL: "SpAtten: Efficient Sparse Attention Architecture with Cascade Token and Head Pruning", ARXIV.ORG, CORNELL UNIVERSITY LIBRARY, 201 OLIN LIBRARY CORNELL UNIVERSITY ITHACA, NY 14853, 17 December 2020 (2020-12-17), XP081840685
- REWON CHILD ET AL: "Generating Long Sequences with Sparse Transformers", ARXIV.ORG, CORNELL UNIVERSITY LIBRARY, 201 OLIN LIBRARY CORNELL UNIVERSITY ITHACA, NY 14853, 23 April 2019 (2019-04-23), XP081172842

## Description

### TECHNICAL FIELD

This specification relates to performing a machine learning task on a network input using neural networks, and, more particularly, to a system for performing a machine learning task on a network input to generate a network output, as well as to a method comprising receiving a network input and processing the network input using an attention neural network of the system.

### BACKGROUND

Neural networks are machine learning models that employ one or more layers of nonlinear units to predict an output for a received input. Some neural networks include one or more hidden layers in addition to an output layer. The output of each hidden layer is used as input to the next layer in the network, i.e., the next hidden layer or the output layer. Each layer of the network generates an output from a received input in accordance with current values of a respective set of parameters.

"SpAtten: Efficient Sparse Attention Architecture with Cascade Token and Head Pruning" (HANRUI WANG ET AL - 2020) describes "SpAtten", an algorithmarchitecture co-design that leverages token sparsity. head sparsity, and quantization opportunities to reduce the attention computation and memory access. Based on the high redundancy of human languages it further describes cascade pruning to prune away unimportant tokens in a sentence. It further describes cascade head pruning to remove unessential heads. It further describes how cascade pruning is different from weight pruning since there is no trainable weight in the attention mechanism, and the pruned tokens and heads are selected on the fly. To support them on hardware it describes a top-k engine to rank token and head importance scores. It further describes progressive quantization that first fetches MSBs only and performs the computation; if the confidence is low, it fetches LSBs and recomputes the attention outputs, trading computation for memory reduction.

"Generating Long Sequences with Sparse Transformers" (REWON CHILD ET AL - 2019) describes sparse factorizations of the attention matrix which reduce transformer time and memory requirements to O(*n*√*n*). It further describes a variation on architecture and initialization to train deeper networks, the recomputation of attention matrices to save memory, and fast attention kernels for training. It further describes how the same architecture can be used to model images, audio and text from raw bytes.

### SUMMARY

This specification describes a system implemented as computer programs on one or more computers in one or more locations that performs a machine learning task on a network input using an attention neural network that includes attention layers, at least one of which is a sparse attention layer.

A sparse attention layer is an attention layer that uses only a small fraction, e.g., less than half, of the weights of the layer when processing any given input to the layer.

The described sparse attention layers decrease the decoding latency of the neural network by decreasing the time required to access layer weights from memory in order to process an input through the neural network, i.e., because layer weights that are not being used do not need to be accessed from memory. Thus, as is described in more detail below, these techniques allow for high-performing attention neural networks, i.e., attention neural networks comparable in quality to those that include conventional rather than sparse attention layers, to be deployed on devices with a constrained memory space or on devices where low decoding latency is required, e.g., on edge devices such as mobile devices, smart speakers, or other Internet of Things (IoT) devices or embedded with a robot or other physical system.

According to an aspect there is provided a system for performing a machine learning task on a network input to generate a network output, as defined in claim 1. The system comprises one or more computers and one or more storage devices storing instructions that, when executed by the one or more computers, cause the one or more computers to implement: an attention neural network configured to perform the machine learning task.

Computing a product between the attended layer input and the weight matrix of the feed-forward neural network layer using only columns of a weight matrix of the feed-forward neural network layer that correspond to the elements of the intermediate outputs that are not constrained to be zero may comprise: loading only the columns of the weight matrix of the feed-forward neural network layer that correspond to the elements of the intermediate output that are not constrained to be zero from memory. Applying a linear transformation to the intermediate output to generate a transformed output may comprise: computing a product between a weight matrix of the linear transformation and the intermediate output using only rows of the weight matrix of the linear transformation that correspond to the elements of the intermediate output that are not constrained to be zero. Computing a product between a weight matrix of the linear transformation and the intermediate output using only rows of the weight matrix of the linear transformation that correspond to the elements of the intermediate output that are not constrained to be zero may comprise: loading only the rows of the weight matrix of the linear transformation that correspond to the elements of the intermediate outputs that are not constrained to be zero from memory. Generating the layer output from the transformed output may comprise: applying a residual connection, layer normalization, or both to the transformed outputs at the positions to generate the layer outputs in the output sequence. A first attention mechanism of the one or more attention mechanisms may be a multi-head attention mechanism having a plurality of attention heads that each apply query-key-value attention, and wherein the attention sub-layer may be configured to: process the respective layer inputs in the input sequence using a multiplicative dense layer to generate, for each respective layer input, a respective split input comprising *S* modules of size *M,* where *S* and *M* are both integers greater than 1; process a tensor comprising the respective split inputs for the respective layer inputs in the sequence using a first two-dimensional convolutional layer to generate a respective set of queries for each attention head; process the tensor using a second two-dimensional convolutional layer to generate a respective set of values for each attention head; process the tensor using a third two-dimensional convolutional layer to generate a respective set of keys for each attention head; for each attention head, apply query-key-value attention over the respective sets of queries, keys, and values for the attention head to generate an attended output; and combine the attended outputs of the attention heads. Optionally, the operations performed by the multiplicative dense layer can represent any arbitrary permutation on any given layer input. *S* may be equal to the number of attention heads, *M* is equal to the dimensionality of the queries, keys, and values, and the first, second, and third convolutional layers each have *M* filters with a kernel size of *KxK* that are convolved over a length dimension of the tensor that corresponds to the number of layer inputs in the input sequence. The attention neural network may comprise an encoder that generates encoded activations that represent the network input and a decoder that includes a first subset of the plurality of attention layers and generates the network output from the encoded activations. The encoder may include a second subset of the plurality of attention layers. The decoder may generate the network output by generating each element of the network output auto-regressively and wherein, for each attention layer in the decoder, the input sequence includes a sequence derived from the encoded activations followed by a sequence derived from any elements of the network output that have already been generated. The one or more attention mechanisms applied by the attention sub-layer of each of the attention layers in the decoder may be masked self-attention mechanisms. For each attention layer in the decoder, the attention sub-layer may be configured to: generate, from the input sequence, an initial attended input sequence at least in part by applying a first attention mechanism to at least a portion of the input sequence for the attention layer; and generate, from the initial attended input sequence, the attended input sequence at least in part by applying a second attention mechanism to at least a portion of the initial attended input sequence. Generating the attended input sequence may comprise applying layer normalization to the initial attended input sequence prior to applying the second attention mechanism. Obtaining the input sequence for the layer may comprise applying layer normalization to an initial input sequence for the layer. The attention layers may be implemented as reversible layers. The residual layer may include a first reversible swap after the first attention mechanism, a second reversible swap after the second attention mechanism, and a third reversible swap after the feed-forward sub-layer. The attention layer may further comprise a recurrent block configured to process the attended input sequence to generate an updated attended sequence, wherein generating the layer output comprises generating the layer output from the updated attended sequence and the transformed outputs generated by the feed-forward sub-layer.

In a further aspect there is provided one or more computer storage media storing instructions that when executed by one or more computer cause the one or more computer to implement the attention neural network.

In a still further aspect there is provided a method comprising: receiving a network input; and processing the network input using the attention neural network to generate a network output for the network input.

Particular embodiments of the subject matter described in this specification can be implemented so as to realize one or more of the following advantages.

Large attention-based neural networks, e.g., neural networks having a Transformer architecture, yield impressive results on many machine leaming tasks. However, these large models are difficult to train and, even when trained successfully, consume a large amount of computational resources and may consume huge amounts of cycles on specialized hardware. Moreover, at decoding time, i.e., when deployed for production purposes to perform inference after being trained, these large models are very slow and result in significant latency in producing an output, even when deployed on specialized hardware. The described techniques impose sparsity on various components of the attention blocks in such models in a manner that does not significantly degrade the quality of the outputs produced by these models. In particular, by imposing sparsity, decoding becomes orders of magnitude faster than the standard Transformer, while performance matches that of the standard Transformer on any of a variety of tasks.

This specification also describes a modification to the architecture of the Transformer to remove cross-attention from the decoder that, when combined with the described sparsity techniques, results in a neural network that achieves high quality performance on even very long sequences with greatly reduced computational resource consumption and latency relative to conventional approaches.

The details of one or more embodiments of the subject matter of this specification are set forth in the accompanying drawings and the description below. Other features, aspects, and advantages of the subject matter will become apparent from the description, the drawings, and the claims.

### BRIEF DESCRIPTION OF THE DRAWINGS

FIG. 1 shows an example neural network system.
FIG. 2 shows the operation of a sparse feed-forward sub-layer.
FIG. 3 shows the operation of a sparse attention sub-layer.
FIG. 4A is a flow diagram of an example process for processing an input using a sparse attention sub-layer.
FIG. 4B is a flow diagram of an example process for processing an input using a sparse feed-forward sub-layer.
FIG. 5 shows an example of an example decoder that does not include any cross-attention sub-layers.

Like reference numbers and designations in the various drawings indicate like elements.

### DETAILED DESCRIPTION

This specification describes a system implemented as computer programs on one or more computers in one or more locations that performs a machine learning task on a network input to generate a network output for the machine learning task.

The machine learning task can be any machine learning task that (i) operates on a network input that is an input sequence, (ii) generates a network output that is an output sequence, or (iii) both.

Some examples of machine learning tasks that the system can be configured to perform follow.

As one example, the task may be a neural machine translation task. For example, if the input to the neural network is a sequence of text, e.g., a sequence of words, phrases, characters, or word pieces, in one language, the output generated by the neural network may be a translation of the sequence of text into another language, i.e., a sequence of text in the other language that is a translation of the input sequence of text. As a particular example, the task may be a multilingual machine translation task, where a single neural network is configured to translate between multiple different source language - target language pairs. In this example, the source language text may be augmented with an identifier that indicates the target language into which the neural network should translate the source language text.

As another example, the task may be an audio processing task. For example, if the input to the neural network is a sequence representing a spoken utterance, the output generated by the neural network may be a score for each of a set of pieces of text, each score representing an estimated likelihood that the piece of text is the correct transcript for the utterance. As another example, if the input to the neural network is a sequence representing a spoken utterance, the output generated by the neural network can indicate whether a particular word or phrase ("hotword") was spoken in the utterance. As another example, if the input to the neural network is a sequence representing a spoken utterance, the output generated by the neural network can identify the natural language in which the utterance was spoken.

As another example, the task can be a natural language processing or understanding task, e.g., an entailment task, a paraphrase task, a textual similarity task, a sentiment task, a sentence completion task, a grammaticality task, and so on, that operates on a sequence of text in some natural language.

As another example, the task can be a text to speech task, where the input is text in a natural language or features of text in a natural language and the network output is a spectrogram, a waveform, or other data defining audio of the text being spoken in the natural language.

As another example, the task can be a health prediction task, where the input is a sequence derived from electronic health record data for a patient and the output is a prediction that is relevant to the future health of the patient, e.g., a predicted treatment that should be prescribed to the patient, the likelihood that an adverse health event will occur to the patient, or a predicted diagnosis for the patient.

As another example, the task can be a text generation task, where the input is a sequence of text, and the output is another sequence of text, e.g., a completion of the input sequence of text, a response to a question posed in the input sequence, or a sequence of text that is about a topic specified by the first sequence of text. As another example, the input to the text generation task can be an input other than text, e.g., an image, and the output sequence can be text that describes the input.

As another example, the task can be an image generation task for generating an image in accordance with a distribution of a set of training images, where the input is a conditioning input, e.g., a sequence of text, a sequence of intensity values from a lower-resolution image, or an input identifying a target object class for the generated image, and the output is a sequence of intensity value for the pixels of an image.

As another example, the task can be an agent control task, where the input is a sequence of observations or other data characterizing states of an environment and the output defines an action to be performed by the agent in response to the most recent data in the sequence. The agent can be, e.g., a real-world or simulated robot, a control system for an industrial facility, or a control system that controls a different kind of agent.

As another example, the task can be a genomics task, where the input is a sequence representing a fragment of a DNA sequence or other molecule sequence and the output is either an embedding of the fragment for use in a downstream task, e.g., by making use of an unsupervised learning technique on a data set of DNA sequence fragments, or an output for the downstream task. Examples of downstream tasks include promoter site prediction, methylation analysis, predicting functional effects of non-coding variants, and so on.

In some cases, the machine learning task is a combination of multiple individual machine learning tasks, i.e., the system is configured to perform multiple different individual machine learning tasks, e.g., two or more of the machine learning tasks mentioned above. For example, the system can be configured to perform multiple individual natural language understanding tasks, with the network input including an identifier for the individual natural language understanding task to be performed on the network input.

To perform the machine learning task, the system includes an attention neural network that includes multiple attention layers. Each layer operates on a respective input sequence that includes a respective layer input at each of one or more positions.

Moreover, each of the layers includes one or more attention sub-layers and a feed-forward sub-layer. The attention sub-layer receives the input sequence for the layer and applies an attention mechanism on the input sequence for the layer to generate an attended input sequence. The attention mechanism applied by the attention layer depends on the configuration of the attention neural network, as will be described in more detail below. The feed-forward sub-layer then operates on the attended input sequence to generate an output sequence for the layer.

For each of the attention layers, the feed-forward sub-layer and, optionally, the attention layer are "sparse" layers. A sparse layer is a layer that has sparsity imposed on the operations performed by the layer, i.e., so that only a small subset of the weights of the layer are active for any given input processed by the layer.

Generally, the layers within the attention neural network can be arranged in any of a variety of configurations.

As one example, when the network input is an input sequence, the attention neural network can include an encoder neural network that includes a subset of the plurality of layers and that encodes the input sequence to generate a respective encoded representation of each input in the sequence. In this example, the attention mechanism applied by the layers in the encoder is a self-attention mechanism, e.g., a multi-head self-attention mechanism.

As another example, the attention neural network can include a decoder neural network that includes a different subset of the plurality of layers and that processes either the network input or, when the attention neural network also includes the encoder neural network, the encoded representation of the network input to generate the network output. In some of these examples, when the network output is an output sequence, the decoder neural network operates auto-regressively and the attention sub-layers within some or all of the layers of the decoder apply masked self-attention over the partially generated output sequence. When the neural network includes both an encoder and a decoder, some of the layers in the decoder apply cross-attention into the encoded representations while others apply self-attention over the output sequence, either masked or not masked. When the attention neural network includes a decoder neural network that operates directly on the input sequence, the attention layers within the decoder can apply a self-attention mechanism over the input sequence.

The specifics of the operation of the attention layers within the decoder neural network and the encoder neural network are described in more detail in Vaswani, et al, attention Is All You Need, arXiv:1706.03762, and Raffel, et al, Exploring the Limits of Transfer Learning with a Unified Text-to-Text Transformer, arXiv:1910.10683, and Devlin et al, BERT: Pre-training of Deep Bidirectional Transformers for Language Understanding, arXiv:1810.04805.

Another example configuration of the attention neural network when the neural network includes both encoder and decoder and operates auto-regressively is described below. In particular, in this configuration, the decoder does not include cross-attention and the attention layers in the decoder instead process a combination of the outputs of the encoder and a sequence generated from any already generated elements in the network output. In some of these configurations, the attention layers in the decoder include two attention mechanisms that each apply masked self-attention, i.e., include two attention mechanisms rather a single attention mechanism.

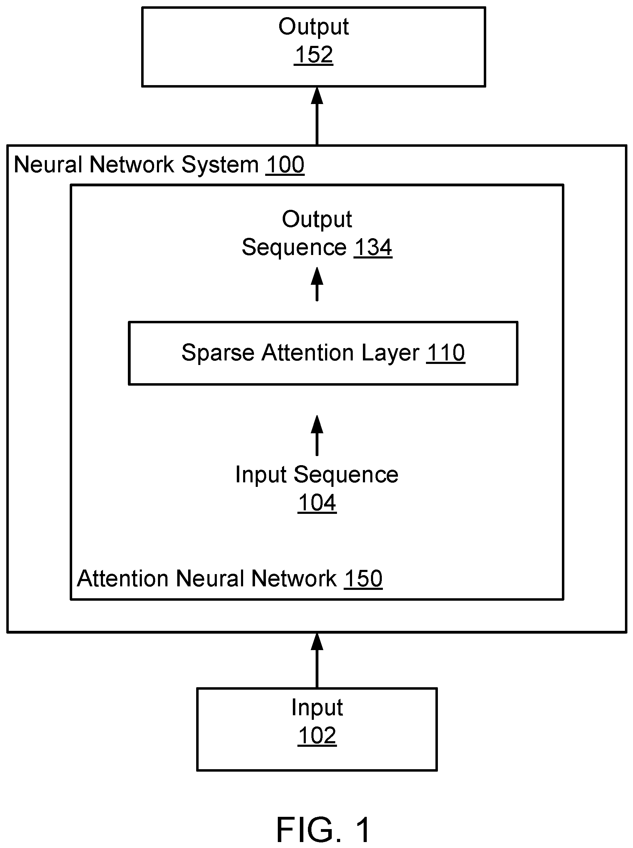

FIG. 1 shows an example neural network system 100. The neural network system 100 is an example of a system implemented as computer programs on one or more computers in one or more locations, in which the systems, components, and techniques described below can be implemented.

The neural network system 100 can receive an input 102 and perform a machine learning task on the input 102 to generate an output 152.

As described above, the neural network system 100 can perform any of a variety of tasks that involve (i) operating on an input 102 that is an input sequence, (ii) generating an output 152 that is an output sequence, or (iii) both.

The neural network system 100 includes an attention neural network 150 that includes multiple attention layers 110, at least one of which is a sparse attention layer.

Each attention layer 110 operates on an input sequence 104 and generates a corresponding output sequence 134.

Although one attention layer 110 is depicted in FIG. 1 for convenience, as described above, the attention neural network 150 generally includes many other layers, including, for example, embedding layers, output layer(s), and other attention layers.

Specifically, the input sequence 104 has a respective input at each of a plurality of input positions in an input order and the output sequence 134 has a respective output at each of the positions in the input order. That is, the attention layer generates a respective output for each input position in the input sequence 104.

In general, the input sequence 104 can be any intermediate sequential data generated by the attention neural network 150 when performing the machine learning task on the input 102.

For example, the input sequence 104 can be embedded (i.e., numeric) representations of the system input 102 generated by an embedding layer, optionally modified by adding or element-wise multiplying each embedding by a positional embedding.

As another example, the input sequence 104 can be an output sequence generated by a preceding attention layer or other layer in the attention neural network 150.

As another example, when the neural network 150 generates the network output auto-regressively, the input sequence 140 can be (i) embedded representations of the currently generated network output as of the current time step, optionally modified by adding or element-wise multiplying each embedding by a positional embedding or (ii) embedded representations of a concatenation of a set of encoded representations of the system input 102 and the currently generated network output as of the current time step, optionally separated by one or more separator tokens and further optionally modified by adding or element-wise multiplying each embedding by a positional embedding.

To generate the output sequence 134 from the input sequence 104, each attention layer includes an attention sub-layer and a feed-forward sub-layer. Optionally, each attention layer can also include an addition + normalization operation after the attention sub-layer, after the feed-forward sub-layer, or both.

The attention sub-layer receives the input sequence 104 for the layer and applies an attention mechanism on the input sequence for the layer to generate an attended input sequence 124.

Generally, to apply the attention mechanism, the sub-layer 120 uses one or more attention heads. Each attention head generates a set of queries, a set of keys, and a set of values, and then applies any of a variety of variants of query-key-value (QKV) attention using the queries, keys, and values to generate an output. In some cases, the keys and values are the same, i.e., generated by applying a shared transformation to the same inputs, while, in other cases, the keys and values are different, i.e., are generated by applying different transformations to the same inputs, different transformations to different inputs, or the same transformation to different inputs. When there are multiple attention heads, the sub-layer 120 then combines the outputs of the multiple attention heads, e.g., by concatenating the outputs and, optionally, processing the concatenated outputs through a linear layer. Examples of QKV attention variants are described in Vaswani, et al, Attention Is All You Need, arXiv:1706.03762, Raffel, et al, Exploring the Limits of Transfer Learning with a Unified Text-to-Text Transformer, arXiv:1910.10683, Devlin et al, BERT: Pre-training of Deep Bidirectional Transformers for Language Understanding, arXiv:1810.04805, Dai, et al, Transformer-XL: Attentive Language Models Beyond a Fixed-Length Context, arXiv:1901.02860, and Kitaev, et al, Reformer: The Efficient Transformer, arXiv: 2001.04451.

Generally, as described above, the layers within the attention neural network can be arranged in any of a variety of configurations and the attention mechanism applied by the attention sub-layer 120 depends on the configuration of the attention neural network 150.

As one example, when the network input is an input sequence, the attention neural network 150 includes an encoder neural network that includes a subset of the plurality of layers and that encodes the input sequence to generate a respective encoded representation of each input in the sequence. In this example, the attention mechanism applied by the attention sub-layers 120 in the encoder is a self-attention mechanism, e.g., a multi-head self-attention mechanism, where the queries, keys, and values are all generated from the input sequence to the attention sub-layer.

As another example, the attention neural network 150 can include a decoder neural network that includes a different subset of the plurality of layers and that processes either the network input or the encoded representation of the network input to generate the network output. In some of these examples, when the network output is an output sequence, the decoder neural network operates auto-regressively and the attention sub-layers 120 within some or all of the layers of the decoder apply masked self-attention over the partially generated output sequence, where the queries, keys, and values are all generated from the input sequence to the attention sub-layer 120.

In some implementations, when the neural network 150 includes both an encoder and a decoder, some of the layers in the decoder apply cross-attention into the encoded representations while others apply self-attention over the output sequence, either masked or not masked. In cross-attention, the queries are generated from the input sequence to the attention sub-layer 120 while the keys and values are generated from the encoded representations of the network input.

When the attention neural network 150 includes a decoder neural network that operates directly on the input sequence, the attention sub-layers 120 within the decoder can apply a self-attention mechanism over the input sequence.

As used in this specification, the term "learned" means that an operation or a value has been adjusted during the training of the attention neural network 150.

In some cases, the attended input sequence 124 is the final output of the attention mechanism. In some other cases, the sub-layer 120 applies an addition + normalization operation that applies a residual connection and layer normalization or another type of normalization to the output of the attention mechanism to generate the attended input sequence.

The feed-forward sub-layer then operates on the attended input sequence to generate an output sequence 134 for the layer 110.

The feed-forward sub-layer is configured to operate on each position in the attended input sequence separately, i.e., in a position-wise manner. In particular, for each input position, the feed-forward sub-layer is configured receive an attended layer input at the input position and apply a set of transformations to the attended layer input at the input position to generate an output for the input position. The transformations applied by the sub-layer will generally be the same for each input position (but different feed-forward sub-layers in the attention neural network will apply different transformations).

More specifically, in a conventional Transformer, i.e., a conventional attention neural network, the feed-forward sub-layer includes a feed forward neural network that operates on each position in the attended input sequence separately, i.e., in a position-wise manner. The FFN can be, e.g., a multi-layer, e.g., two layer or three layer, neural network of fully-connected layers with, e.g., a ReLU or GeLU activation function.

In particular, for each input position, the feed-forward sub-layer is configured receive an attended layer input at the input position and to process the attended layer input using the FFN to generate an initial output for the input position.

Thus, the feed-forward sub-layer processes each attended layer input using the same FFN.

Optionally, the attention layer 110 can then then apply an addition + normalization operation to the initial outputs to generate the output sequence 134 for the attention layer 110.

Generally, as indicated above, some or all of the attention layers within the attention neural network are sparse attention layers 110. For example, every attention layer can be a sparse attention layer 110, every other attention layer within the attention neural network can be a sparse attention layer 110, or every third attention layer within the attention neural network can be a sparse attention layer 110.

A sparse attention layer 110 is an attention layer that (i) replaces a conventional attention sub-layer with a sparse attention sub-layer, (ii) a conventional feed-forward sub-layer with a sparse feed-forward sub-layer, or (iii) both. A sub-layer is "sparse" when only a small proper subset of the parameters of the layer are used for any given input processed by the sub-layer.

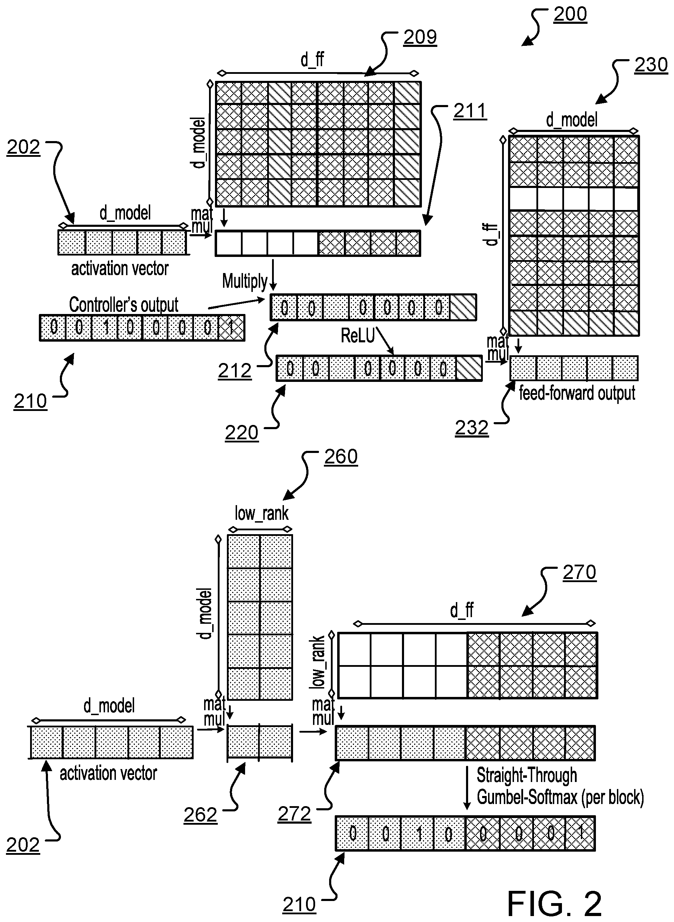

Sparse fully-connected sub-layers are described below with reference to FIG. 2.

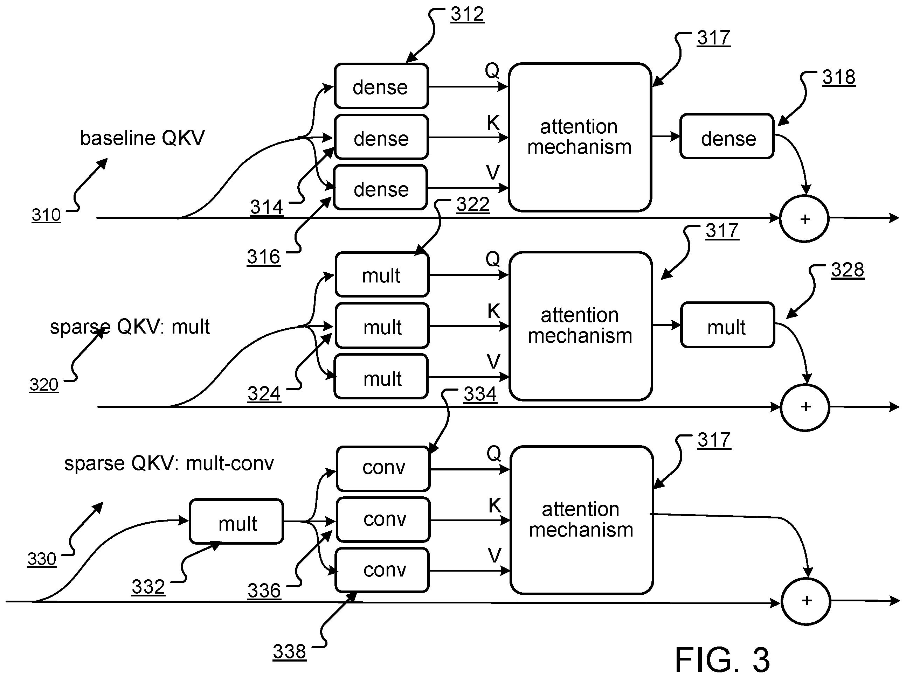

Sparse attention sub-layers are described below with reference to FIG. 3.

Prior to using the neural network 150 to generate new outputs for the machine learning task, the system 100 or another training system trains the neural network on training data. Generally, the neural network 150 can be trained on any loss function is appropriate for the task(s) that the neural network 150 is configured to perform using a conventional machine learning training techniques. Examples of loss functions that can be used include cross-entropy loss, perplexity loss, mean squared error loss, negative log likelihood loss, and so on. Examples of machine learning training techniques include stochastic gradient descent, Adam, rmsProp, Adafactor, and so on.

In some implementations, during training, during inference after training, or both, the system 100 implements the attention neural network 150 by parallelizing the neural network across multiple hardware devices. For example, the system 100 can implement the attention neural network across multiple hardware accelerators, e.g., Tensor Processing Units (TPUs), graphics processing units (GPUs), or both.

In some implementations, after training the neural network 150, the system 100 can use the neural network 150 to train another, smaller neural network that performs the machine learning task through distillation. The system 100 can then use the smaller neural network for inference. For example, the smaller neural network can be an attention neural network that does not have sparse attention layers but that has fewer parameters than the neural network 150.

FIG. 2 shows the operation of a sparse feed-forward sub-layer 200 while processing an attended layer input ("activation vector") 202 from the attended input sequence that is processed by the sub-layer 200

While only a single input 202 is shown in FIG. 2, in practice the sub-layer 200 is configured to process each layer input in the attended input sequence in parallel to generate an output sequence that includes a respective layer output at each of the positions in the attended input sequence.

In particular, in a conventional Transformer, i.e., one that has conventional attention layers instead of sparse attention layers, decoding speed, i.e., the amount of time required to generate a respective network output for each network input in a batch one of more inputs at inference, i.e., after training, is dominated by the execution cost of the feed-forward sub-layers within the attention layers of the Transformer. In particular, as described above, each feed-forward sub-layer has two fully-connected, dense layers with a ReLu nonlinearity in between. Thus, each time the output of the sub-layer needs to be computed after training, i.e., at inference, all of the weights in the weight matrices of the two fully-connected layers need to be loaded from the memory of the device on which the sub-layer is deployed. This introduces significant latency into the decoding process.

For example, in many Transformers, the dimensionality d_ff of the activation vectors between the two fully-connected layers within the feed-forward sub-layer is generally 4 or 8 times larger than the dimensionality d_model of the input vectors and the output vectors of the sub-layer. Thus, performing inference using the sub-layer requires loading 2 * d_ff * d_model weight values from the memory of the device. Given the increase in dimensionality within the sub-layer, loading this many weight values from memory requires a significant amount of time and introduces significant latency into the decoding process.

By making use of the described sub-layer 200, only a small fraction of the weight values need to be loaded from memory for each inference, greatly reducing the latency incurred waiting for weights to be loaded before the processing of the layer can begin.

In particular, for each attended layer input 202, the sub-layer 200 selects, based on the attended layer input 202, a proper subset of elements in an intermediate output 220 that are constrained to have a zero value. That is, the selected proper subset is constrained to have a zero value and the other elements of the intermediate output 220, i.e., the elements that are not in the proper subset, are not constrained to have a zero value.

In other words, prior to processing the input 202 through either of the fully-connected layers, the layer 200 generates, from the input 202, a controller output 210 that specifies a proper subset of the elements in the intermediate output 220 that the sub-layer 200 will constrain to be zero. Elements that are constrained to be zero are labeled with a 0 in the controller output 210 and elements that are not constrained are labeled with a 1.

More specifically, the elements of the intermediate outputs are partitioned into a plurality of blocks and the sub-layer 200 selects, based on the attended layer input 202, a respective element from each block and, for each block, constrains each element in the block other than the respective selected element from the block to have a zero value. In the example of FIG. 2, the intermediate output 220 has two blocks of four elements each, and the controller output 210 specifies that the first, second, and fourth elements in the first block are constrained to be zero and the first, second, and third element in the second block are constrained to be zero.

An example of the processing that can be performed by the sub-layer 200 to select the proper-subset for the input 202 is shown on the right-hand side of FIG. 2.

As can be seen from FIG. 2, the sub-layer 200 projects the attended layer input 202 using a learned transformation to generate a projected layer input that has the same dimensionality as the intermediate output.

In particular, so that the processing is computationally inexpensive, the sub-layer 200 uses a low-rank bottleneck dense layer as the linear transformation. More specifically, the sub-layer 200 first computes a product between the input 202 and a first low-rank matrix 260 to generate a bottlenecked representation 262 that has a dimensionality low_rank that is smaller than d_model and then computes a product between the bottlenecked representation 262 and a second low rank matrix 270 to generate the projected layer input 272 that has dimensionality d_ff, i.e., the same dimensionality as the intermediate output 220.

For each block of the projected layer input 272, the sub-layer 200 selects the element with the highest value of any element in the block and constrains each element in the corresponding block in the intermediate output other than the element corresponding to the selected element to have a zero value.

While this discrete selection can be employed at inference, this operation is not differentiable and, therefore, during training, the sub-layer 200 uses the Gumbel-Softmax trick to select the largest element in block in a manner that can be approximated using a differentiable softmax operation with annealing temperature and allows the sub-layer 200 to use the Straight-Through Gumbel-Softmax estimator to backpropagate gradients through the selection.

Once the elements of the intermediate output 220 that will be constrained to be zero are selected, the sub-layer 200 then processes the attended layer input 202 through a feed-forward neural network layer to generate the intermediate output 220 while constraining the elements in the proper subset to have a zero value.

In particular, as can be seen in the example of FIG. 2, the feed-forward neural network layer has a weight matrix 209 and a ReLu non-linearity. Thus, the sub-layer computes a product between the input 202 and the weight matrix 209 to generate an initial sparse intermediate output 212 and then applies the ReLU to the initial intermediate output 212 to generate the intermediate output 220.

While the constraint on the intermediate output 220 could naively be applied by computing an element-wise product between the controller output 220 and an initial intermediate output 211 that is the output of a full dense multiplication between the weight matrix 209 and the input 202, the sub-layer 200 instead performs the multiplication in a manner that significantly reduces the amount of data that needs to be loaded from memory and thereby reduces the decoding latency.

In particular, the sub-layer computes a product between the attended layer input 202 and the weight matrix 209 of the feed-forward neural network layer using only columns of the weight matrix 209 of the feed-forward neural network that correspond to the elements of the intermediate output that are not constrained to be zero. That is, as can be seen from FIG. 2, each non-zero element of the intermediate output 220 corresponds to a single column of the weight matrix 210. Thus, columns that correspond to zero elements do not need to be used in computing the initial intermediate output 112. Thus, the sub-layer can compute the product by loading only the columns of the weight matrix 209 of the feed-forward neural network that correspond to the elements of the intermediate output 220 that are not constrained to be zero from memory. In the example of FIG. 2, this results in only needing to load two of the eight columns from memory, i.e., results in a 75% reduction in the number of values that need to be loaded from memory in order to compute this product.

The sub-layer 200 then applies a linear transformation to the intermediate output 220 to generate a transformed output 232. In particular, the sub-layer 200 computing a product between a weight matrix 230 of the linear transformation and the intermediate output 220 using only rows of the weight matrix 230 of the linear transformation that correspond to the elements of the intermediate output that are not constrained to be zero. That is, as can be seen from FIG. 2, each non-zero element of the intermediate output 220 corresponds to a single row of the weight matrix 230. Thus, rows that correspond to zero elements do not need to be used in computing the transformed output 220. Thus, the sub-layer 200 can compute the product by loading only the rows of the weight matrix 230 that correspond to the elements of the intermediate output 220 that are not constrained to be zero from memory. In the example of FIG. 2, this results in only needing to load two of the eight rows from memory, i.e., results in a 75% reduction in the number of values that need to be loaded from memory in order to compute this product.

The sub-layer 200 then generates the layer output at the position from the transformed output 232. For example, the sub-layer 230 can apply a residual connection, layer normalization, or both to the transformed outputs at the positions to generate the layer outputs in the output sequence.

However, despite the reduction in weights that need to be loaded, the described sparse feed-forward sub-layer nonetheless maintains performance that is on par with a conventional feed-forward sub-layer. In particular, because the conventional layer applies a ReLu activation function between the two matrix products, the application of the ReLu results in a significant number of zeroes in the conventional intermediate output, i.e., because the ReLu maps any negative value to zero. Thus, conventional sub-layers "waste" computational capacity that results in an element being mapped to zero or that operates on an element that is zero. By removing this waste, the descried layer achieves significantly smaller latency while maintaining performance.

FIG. 3 shows the operation of a conventional attention sub-layer 310 and two variants of a sparse attention sub-layer 320 and 330.

The conventional attention sub-layer 310 applies a baseline query-key-value (QKV) self-attention scheme.

In this scheme, the sub-layer 310 applies a first dense matrix 312 to the input sequence 302 to generate queries Q for each of the attention heads, applies a second dense matrix 314 to the input sequence 302 to generate keys K for each of the attention heads, applies a third dense matrix 316 to the input sequence 302 to generate values V for each of the attention heads, and then, for each attention head, applies a query-key-value attention mechanism 317 to Q, K, and V for the attention head to generate a respective output for the attention head. The sub-layer then concatenates these outputs and processes the concatenated outputs using another dense matrix 318 to generate the outputs of the attention mechanism (which are then combined with the input sequence through a residual connection).

Thus, performing this baseline scheme requires loading d_model * d_model parameters for each of the above weight matrices from memory, significantly impacting the decoding latency.

To improve upon this latency, the sparse variant 320 replaces the dense matrices 312, 314, 316, and 318 with respective multiplicative dense layers 322, 324, 326, and 328.

A multiplicative dense layer is a layer that performs operations that can represent any arbitrary permutation on any given layer input but that has fewer parameters than an otherwise equivalent dense layer that multiplies the given layer input by a dense matrix. That is, the multiplicative dense layer can generate an output that is equivalent to that of multiplying a given input by one of the dense matrices 312-318 but has fewer than d_model * d_model parameters.

In particular, to apply a multiplicative dense layer, the sparse variant 320 divides the dimensionality of the layer inputs d_model into *S* modules that are each of size *M =* d_model / *S,* where S is equal to the number of attention heads of the sub-layer and M is equal to the dimensionality of the queries, keys, and values. The multiplicative dense layer then generates an output matrix *Y* of size *S* x *M* from an input vector *x* that has dimensionality d_model, with each entry *Y*_{s,m} of *Y* being equal to: ${Y}_{s , m} = {\sum }_{i} {x}_{i} {D}_{i , s} {E}_{i , m} ,$ where the sum goes from 1 to d_model, the matrix *D* is a d_model x *S* weight matrix of the layer, and *E* is a d_model x *M* weight matrix of the layer.

Thus, although the multiplicative dense layer is a layer that performs operations that can represent any arbitrary permutation on any given layer input, the layer has d_model * d_model / *S +* d_model * *S* parameters, i.e., significantly fewer parameters than the d_model * d_model parameters of an equivalent dense matrix. Thus, the sparse variant 320 can perform the QKV attention mechanism using fewer parameters than the conventional sub-layer 310.

However, performing this baseline scheme still requires loading d_model * d_model / S + d_model * S parameters for each of the above multiplicative dense layers from memory.

The sparse variant 330 further improves on this by having a single multiplicative dense layer 332 per attention head, followed by a convolutional layer 334 to generate the queries Q, a convolutional layer 336 to generate the keys K, and a convolutional layer 338 to generate the values V.

Each convolutional layer is a two-dimensional convolutional layer that is convolved over the length dimension (the number of layer inputs in the sequence), i.e., that treats the length dimension (the number of layer inputs in the sequence) and number of modules *S* like height and width of an image, respectively. This layer uses *M* filters and a kernel size of *K* × *K* so that each filter looks at *K* modules (in 'S' axis) of the last *K* tokens ('length' axis). Replacing the standard dense layer with such a convolution reduces the parameter count and computation time of the attention sub-layer even relative to the variant 320. At the same time, by convolving over the 'length' axis, the variant 330 can incorporate more context into this computation, improving the quality of the attention mechanism.

In some cases, in the variant 330, the concatenated output of the attention heads is provided as the output of the attention mechanism, i.e., rather than using another dense matrix or multiplicative layer.

Thus, by making use of the multiplicative layer, the variant 320 and, particularly, the variant 330 significantly reduce the number of values that need to be loaded from memory relative to the conventional variant 310. However, because of the property that the multiplicative layer can represent any arbitrary permutation, the performance of the variants 320 and 330 is on par with and, in some cases, exceeds that of the conventional variant 310.

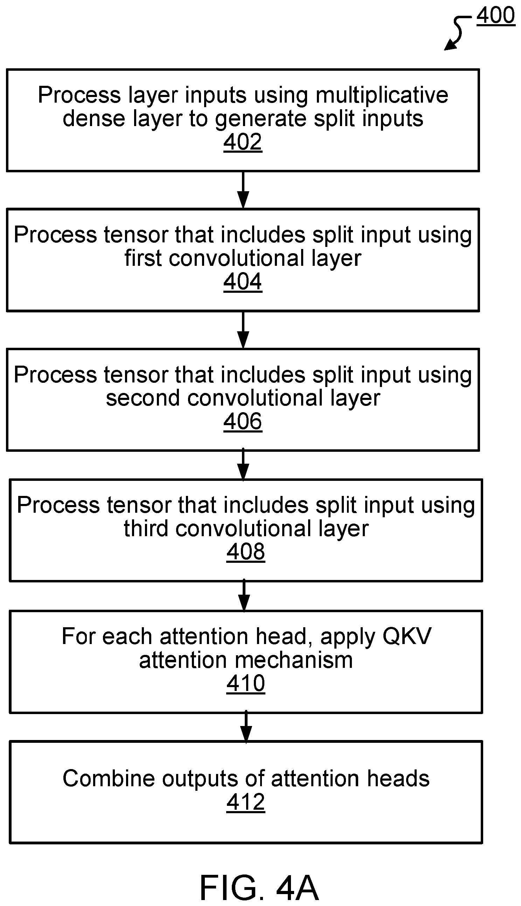

FIG. 4A is a flow diagram of an example process 400 for processing a layer input sequence using a sparse attention sub-layer. For convenience, the process 400 will be described as being performed by a system of one or more computers located in one or more locations. For example, a neural network system that includes a sparse attention layer, e.g., neural network system 100 of FIG. 1A, appropriately programmed in accordance with this specification, can perform the process 400.

The system processes the respective layer inputs in the input sequence using a multiplicative dense layer to generate, for each respective layer input, a respective split input that includes S modules of size M, where *S* and *M* are both integers greater than 1 (step 402). As described above, the multiplicative dense layer can generate a respective *S* x *M* matrix for each layer input using fewer parameters than a dense matrix.

The system processes a tensor that includes the respective split inputs for the respective layer inputs in the sequence using a first two-dimensional convolutional layer to generate a respective set of queries for each attention head (step 404). That is, each of the S modules can correspond to a different attention head and the respective set of queries for each attention head corresponds to the outputs of the convolutional layer for the corresponding module.

The system processes the tensor using a second two-dimensional convolutional layer to generate a respective set of values for each attention head (step 406). That is, each of the S modules can correspond to a different attention head and the respective set of keys for each attention head corresponds to the outputs of the convolutional layer for the corresponding module.

The system processes the tensor using a third two-dimensional convolutional layer to generate a respective set of keys for each attention head (step 408). That is, each of the S modules can correspond to a different attention head and the respective set of values for each attention head corresponds to the outputs of the convolutional layer for the corresponding module.

For each attention head, the system applies query-key-value (QKV) attention over the respective sets of queries, keys, and values for the attention head to generate an attended output (step 410).

The system then combines the attended outputs from the attention heads to generate the output of the attention mechanism (step 412). For example, the system can concatenate the attended outputs from the attention heads and then provide concatenated output as the output of the attention mechanism.

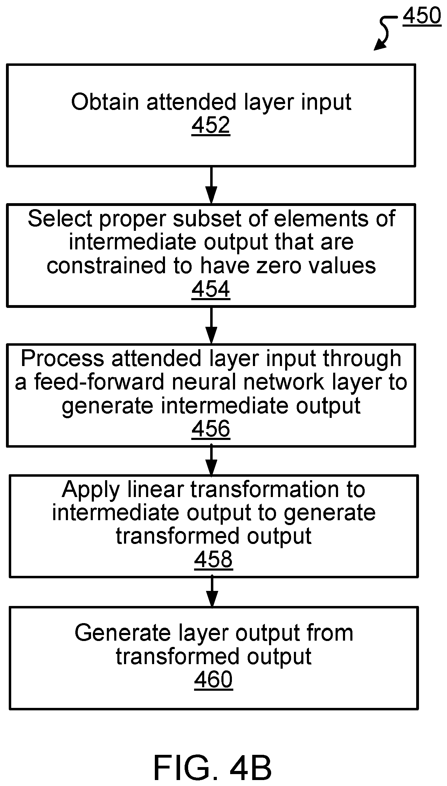

FIG. 4B is a flow diagram of an example process 450 for processing an attended layer input using a sparse feed-forward layer. For convenience, the process 450 will be described as being performed by a system of one or more computers located in one or more locations. For example, a neural network system that includes a sparse attention layer, e.g., neural network system 100 of FIG. 1A, appropriately programmed in accordance with this specification, can perform the process 450.

The system can perform the process 450 in parallel for each position in the input sequence to the attention layer, i.e., for each attended layer input at each position in the sequence.

The system obtains the attended layer input (step 452).

The system selects, based on the attended layer input, a proper subset of elements in an intermediate output of the sub-layer that are constrained to have a zero value (step 454). That is, only the proper subset of elements are constrained to have zero values and the other elements of the attended layer input that are not in the proper subset are not constrained to have a zero value. The intermediate output is the output that is generated by processing the attended layer input through a feed-forward neural network layer that has a weight matrix and that applies an element-wise non-linear activation function, e.g., a ReLU non-linearity.

The system processes the attended layer input through a feed-forward neural network layer to generate the intermediate output while constraining the elements in the proper subset to have a zero value (456).

The system applies a linear transformation to the intermediate output to generate a transformed output (step 458).

The system generates the layer output at the position from the transformed output (step 460).

For example, the system can apply a residual connection, layer normalization, or both to the transformed outputs at the positions to generate the layer outputs in the output sequence.

As another example, the system can also add recurrence to the feed-forward sub-layer by incorporating a recurrent block into the feed-forward sub-layer. That is, the attention layer will also include a recurrent block configured to process the attended input sequence to generate an updated attended sequence and then the attention layer generates the layer output from the updated attended sequence and the transformed outputs generated by the feed-forward sub-layer.

For example, the system can project each attended layer input from d_model to a smaller dimension, and then apply a recurrent unit, e.g., a simple recurrent unit (SRU) to the projected input, and then project the output of the SRU back to a dimensionality of d_model and add the result to the transformed output generated from the same attended layer input. This low-rank recurrence can assist the neural network in generalizing to unseen inputs after training.

As described above, in some cases, when the neural network includes both an encoder and a decoder, the attention layers in the decoder do not include any cross-attention (as would be the case in a conventional Transformer).

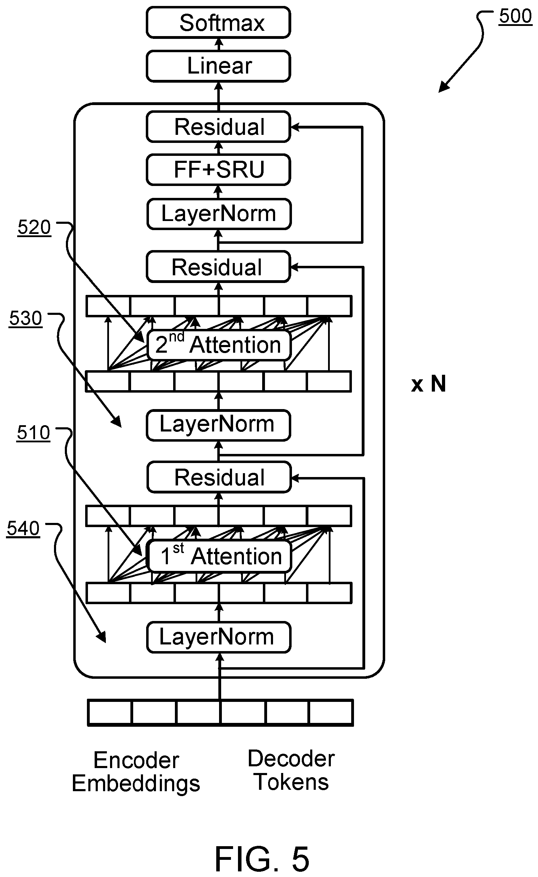

FIG. 5 shows an example of an example decoder 500 that does not include any cross-attention sub-layers. More specifically, FIG. 5 shows the operation of the decoder 500 at a given time step during the generation of an output sequence. In particular, in the example of FIG. 5, three tokens have already been generated and the fourth is being generated at the given time step.

As described above, rather than incorporating cross-attention into the decoder 500, the decoder 500 instead processes a concatenation of (i) the encoder embeddings, i.e., the encoded representation of the network input generated by the encoder and (ii) the already generated tokens that were generated at earlier time steps.

In particular, because of the sparsity of the attention and feed-forward sub-layers, separating decoder self-attention and encoder-decoder attention ("cross-attention") may not be necessary any more from the perspective of efficiency and the decoder 500 can achieve acceptable efficiency by simply processing the concatenated input shown in FIG. 5.

Moreover, rather than simply remove cross-attention, in some cases, the decoder 500 can include two self-attention sub-layers, each of which perform self-attention, before the feed-forward sub-layer in each decoder block to add additional computational capacity to the decoder 500.

In these cases, the attention layers in the decoder generate, from the input sequence, an initial attended input sequence at least in part by applying a first attention mechanism 510 to at least a portion of the input sequence for the attention layer and then generate, from the initial attended input sequence, the attended input sequence at least in part by applying a second attention mechanism 520 to at least a portion of the initial attended input sequence. In some cases, as shown in FIG. 5, the attention layer applies layer normalization 530 to the initial attended input sequence prior to applying the second attention mechanism, applies layer normalization 540 to an initial input sequence for the layer prior to applying the first attention mechanism, or both.

While not shown in FIG. 5, in some cases, the attention layers in the encoder, decoder, or both can be implemented as reversible layers to assist with large batch training and to allow finetuning even large models on single machines.

A reversible attention layer is an attention layer that has a reversible residual connection (a "reversible swap") in place of the residual connections within the attention layer.

For example, when the attention layer is in the decoder and includes two attention mechanisms, the layer includes a first reversible swap after the first attention mechanism, a second reversible swap after the second attention mechanism, and a third reversible swap after the feed-forward sub-layer.

When the attention layer includes only one attention mechanism, the layer includes a first reversible swap after the attention mechanism and a second reversible swap after the feed-forward sub-layer.

A reversible layer operates on a layer input that is partitioned into a pair of input partitions and then operates on the pair of input partitions to generate a pair of output partitions. An initial reversible residual connection layer within the neural network, i.e., before any reversible attention layers, can perform the partition, for example, by applying binary maskings to the layer input. For example, the masking can be a checkerboard pattern masking that has value 1 where the sum of spatial input coordinates is odd, and 0 otherwise. As another example, the masking can be a channel-wise masking that has value 1 for the first half of the input channel dimensions and 0 for the second half.

Thus, when the attention layer is in the decoder and includes two attention mechanisms, the first attention mechanism applies attention over the first partition and then the first reversible swap sums the output of the attention mechanism with the second partition to generate an initial attended partition, the second attention mechanism applies attention over the second initial attended partition to generate an attended partition and the second reversible swap sums the first partition with the attended partition to generate a final attended partition, the feed-forward sub layer operates on the final attended partition to generate a layer output partition and the third reversible swap sums the layer output partition with the second initial attended partition to generate a final layer output partition. The output of the layer is then the final layer output partition and the final attended partition.

When the attention layer includes only one attention mechanism, the attention mechanism applies attention over the first partition and then the first reversible swap sums the output of the attention mechanism with the second partition to generate an attended partition, the feed-forward sub layer operates on the attended partition to generate a layer output partition and the second reversible swap sums the layer output partition with the first partition to generate a final layer output partition. The output of the layer is then the final layer output partition and the attended partition.

Optionally, layer normalization can be applied before or after any of the reversible swaps in the layer.

Thus, when a given sparse attention layer is a reversible sparse attention layer, applying an attention mechanism to a given input sequence should be understood as referring to applying an attention mechanism to a corresponding partition of the given input sequence. Similarly, the feed-forward sub-layer operating on a given attended input sequence should be understood as referring to operating on a corresponding partition of an overall attended input sequence.

Including these reversible attention layers allows a training system to recompute the input of each layer on-demand during back-propagation, rather than storing it in memory, resulting in significant memory savings during training and allowing large models to be trained end-to-end or fine-tuned even on a single machine.

Reversible layers are described in more detail in Nikita Kitaev, Lukasz Kaiser, and Anselm Levskaya. Reformer: The efficient transformer. arXiv preprint arXiv:2001.04451, 2020.

This specification uses the term "configured" in connection with systems and computer program components. For a system of one or more computers to be configured to perform particular operations or actions means that the system has installed on it software, firmware, hardware, or a combination of them that in operation cause the system to perform the operations or actions. For one or more computer programs to be configured to perform particular operations or actions means that the one or more programs include instructions that, when executed by data processing apparatus, cause the apparatus to perform the operations or actions.

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible non transitory storage medium for execution by, or to control the operation of, data processing apparatus. The computer storage medium can be a machine-readable storage device, a machine-readable storage substrate, a random or serial access memory device, or a combination of one or more of them. Alternatively or in addition, the program instructions can be encoded on an artificially generated propagated signal, e.g., a machine-generated electrical optical, or electromagnetic signal, that is generated to encode information for transmission to suitable receiver apparatus for execution by a data processing apparatus.

The term "data processing apparatus" refers to data processing hardware and encompasses all kinds of apparatus, devices, and machines for processing data, including by way of example a programmable processor, a computer, or multiple processors or computers. The apparatus can also be, or further include, special purpose logic circuitry, e.g., an FPGA (field programmable gate array) or an ASIC (application specific integrated circuit). The apparatus can optionally include, in addition to hardware, code that creates an execution environment for computer programs, e.g., code that constitutes processor firmware, a protocol stack, a database management system, an operating system, or a combination of one or more of them.

A computer program, which may also be referred to or described as a program, software, a software application, an app, a module, a software module, a script, or code, can be written in any form of programming language, including compiled or interpreted languages, or declarative or procedural languages; and it can be deployed in any form, including as a stand alone program or as a module, component, subroutine, or other unit suitable for use in a computing environment. A program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub programs, or portions of code. A computer program can be deployed to be executed on one computer or on multiple computers that are located at one site or distributed across multiple sites and interconnected by a data communication network.

In this specification, the term "database" is used broadly to refer to any collection of data: the data does not need to be structured in any particular way, or structured at all, and it can be stored on storage devices in one or more locations. Thus, for example, the index database can include multiple collections of data, each of which may be organized and accessed differently.

Similarly, in this specification the term "engine" is used broadly to refer to a softwarebased system, subsystem, or process that is programmed to perform one or more specific functions. Generally, an engine will be implemented as one or more software modules or components, installed on one or more computers in one or more locations. In some cases, one or more computers will be dedicated to a particular engine; in other cases, multiple engines can be installed and running on the same computer or computers.

The processes and logic flows described in this specification can be performed by one or more programmable computers executing one or more computer programs to perform functions by operating on input data and generating output. The processes and logic flows can also be performed by special purpose logic circuitry, e.g., an FPGA or an ASIC, or by a combination of special purpose logic circuitry and one or more programmed computers.

Computers suitable for the execution of a computer program can be based on general or special purpose microprocessors or both, or any other kind of central processing unit. Generally, a central processing unit will receive instructions and data from a read only memory or a random access memory or both. The essential elements of a computer are a central processing unit for performing or executing instructions and one or more memory devices for storing instructions and data. The central processing unit and the memory can be supplemented by, or incorporated in, special purpose logic circuitry. Generally, a computer will also include, or be operatively coupled to receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer readable media suitable for storing computer program instructions and data include all forms of non volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser. Also, a computer can interact with a user by sending text messages or other forms of message to a personal device, e.g., a smartphone that is running a messaging application, and receiving responsive messages from the user in return.

Data processing apparatus for implementing machine learning models can also include, for example, special-purpose hardware accelerator units for processing common and computeintensive parts of machine learning training or production, i.e., inference, workloads.

Machine learning models can be implemented and deployed using a machine learning framework, e.g., a TensorFlow framework, a Microsoft Cognitive Toolkit framework, an Apache Singa framework, or an Apache MXNet framework.

Embodiments of the subject matter described in this specification can be implemented in a computing system that includes a back end component, e.g., as a data server, or that includes a middleware component, e.g., an application server, or that includes a front end component, e.g., a client computer having a graphical user interface, a web browser, or an app through which a user can interact with an implementation of the subject matter described in this specification, or any combination of one or more such back end, middleware, or front end components. The components of the system can be interconnected by any form or medium of digital data communication, e.g., a communication network. Examples of communication networks include a local area network (LAN) and a wide area network (WAN), e.g., the Internet.

The computing system can include clients and servers. A client and server are generally remote from each other and typically interact through a communication network. The relationship of client and server arises by virtue of computer programs running on the respective computers and having a client-server relationship to each other. In some embodiments, a server transmits data, e.g., an HTML page, to a user device, e.g., for purposes of displaying data to and receiving user input from a user interacting with the device, which acts as a client. Data generated at the user device, e.g., a result of the user interaction, can be received at the server from the device. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products. In some cases, multitasking and parallel processing may be advantageous.

## Claims

1. A system (100) for performing a machine learning task on a network input (102) to generate a network output (152), the system comprising one or more computers and one or more storage devices storing instructions that, when executed by the one or more computers, cause the one or more computers to implement:
an attention neural network (150) configured to perform the machine learning task, the attention neural network comprising a plurality of attention layers (110), each attention layer comprising an attention sub-layer (120) and a feed-forward sub-layer (200);
wherein the attention sub-layer (120) is configured to:
obtain an input sequence (104) for the attention layer, the input sequence (104) for the attention layer comprising a respective layer input at each of one or more positions; and
generate an attended input sequence (124) at least in part by applying one or more attention mechanisms to the input sequence for the attention layer, the attended input sequence comprising a respective attended layer input (202) at each of the one or more positions; and
wherein the feed-forward sub-layer (200) is configured to:
receive the attended input sequence (124); and
generate an output sequence (134) for the attention layer from at least the attended input sequence (124), the output sequence (134) comprising a respective layer output at each of the one or more positions;
wherein generating the output sequence (134) for the attention layer comprises, for each of the positions:
obtaining (452) an attended layer input (202) at the position;
selecting (454), based on the attended layer input (202), and constraining a proper subset of elements in an intermediate output (220), the elements in the proper subset being constrained to have a zero value, wherein the other elements of the attended layer input (202) that are not in the proper subset are not constrained to have a zero value;
processing (456) the attended layer input (202) through a feed-forward neural network layer to generate the intermediate output (220) while constraining the elements in the proper subset to have a zero value, the processing the attended layer input comprising computing a product between the attended layer input (202) and a weight matrix (209) of the feed-forward neural network layer using only columns of the weight matrix (209) of the feed-forward neural network layer that correspond to the elements of the intermediate output that are not constrained to be zero, the computing a product comprising loading only the columns of the weight matrix of the feed-forward neural network layer that correspond to the elements of the intermediate output (220) that are not constrained to be zero from memory;
applying (458) a linear transformation to the intermediate output (220) to generate a transformed output (232); and
generating (460) the layer output at the position from the transformed output (232);
wherein the elements of the intermediate outputs are partitioned into a plurality of blocks and wherein the selecting, based on the attended layer input, and the constraining the proper subset of elements comprises:
projecting the attended layer input using a learned transformation to generate a projected layer input (272) that has the same dimensionality as the intermediate output (220); and
for each block of the projected layer input, selecting the element with the highest value of any element in the block and constraining each element in the corresponding block in the intermediate output other than the element corresponding to the selected element to have a zero value.

2. The system of claim 1, wherein the learned transformation is a low-rank bottleneck dense layer, in which the feed-forward sub-layer (200) computes a product between the attended layer input (202) and a first low-rank matrix (260) to generate a bottlenecked representation (262) and then computes a product between the bottlenecked representation (262) and a second low rank matrix (270) to generate the projected layer input (272) that has the same dimensionality as the intermediate output (220).

3. The system of any preceding claim wherein applying a linear transformation to the intermediate output to generate a transformed output comprises:
computing a product between a weight matrix of the linear transformation (230) and the intermediate output using only rows of the weight matrix of the linear transformation that correspond to the elements of the intermediate output that are not constrained to be zero, wherein computing a product between a weight matrix of the linear transformation and the intermediate output using only rows of the weight matrix of the linear transformation that correspond to the elements of the intermediate output that are not constrained to be zero optionally comprises:
loading only the rows of the weight matrix of the linear transformation that correspond to the elements of the intermediate outputs that are not constrained to be zero from memory.

4. The system of any preceding claim, wherein generating the layer output from the transformed output comprises:
applying a residual connection, layer normalization, or both to the transformed outputs at the positions to generate the layer outputs in the output sequence.

5. The system of any preceding claim, wherein a first attention mechanism (317) of the one or more attention mechanisms is a multi-head attention mechanism having a plurality of attention heads that each apply query-key-value attention, and wherein the attention sub-layer is configured to:
process the respective layer inputs in the input sequence using a multiplicative dense layer (332) to generate, for each respective layer input, a respective split input comprising S modules of size M, where S and M are both integers greater than 1;
process a tensor comprising the respective split inputs for the respective layer inputs in the sequence using a first two-dimensional convolutional layer (334) to generate a respective set of queries for each attention head;
process the tensor using a second two-dimensional convolutional layer (336) to generate a respective set of values for each attention head;
process the tensor using a third two-dimensional convolutional layer (338) to generate a respective set of keys for each attention head;
for each attention head, apply query-key-value attention over the respective sets of queries, keys, and values for the attention head to generate an attended output; and
combine the attended outputs of the attention heads, wherein the operations performed by the multiplicative dense layer can optionally represent any arbitrary permutation on any given layer input.

6. The system of claim 5, wherein S is equal to the number of attention heads, M is equal to the dimensionality of the queries, keys, and values, and the first, second, and third convolutional layers each have M filters with a kernel size of KxK that are convolved over a length dimension of the tensor that corresponds to the number of layer inputs in the input sequence.

7. The system of any preceding claim, wherein the attention neural network comprises an encoder that generates encoded activations that represent the network input and a decoder that includes a first subset of the plurality of attention layers and generates the network output from the encoded activations, wherein the encoder optionally includes a second subset of the plurality of attention layers.

8. The system of claim 7, wherein the decoder generates the network output by generating each element of the network output auto-regressively and wherein, for each attention layer in the decoder, the input sequence includes a sequence derived from the encoded activations followed by a sequence derived from any elements of the network output that have already been generated, wherein the one or more attention mechanisms applied by the attention sub-layer of each of the attention layers in the decoder are optionally masked self-attention mechanisms.

9. The system of any one of claims 7 or 8, wherein, for each attention layer in the decoder, the attention sub-layer is configured to:
generate, from the input sequence, an initial attended input sequence at least in part by applying a first attention mechanism (510) to at least a portion of the input sequence for the attention layer; and
generate, from the initial attended input sequence, the attended input sequence at least in part by applying a second attention mechanism (520) to at least a portion of the initial attended input sequence, wherein generating the attended input sequence optionally comprises applying layer normalization (530) to the initial attended input sequence prior to applying the second attention mechanism.

10. The system of any preceding claim, wherein obtaining the input sequence for the attention layer comprising applying layer normalization (540) to an initial input sequence for the attention layer.

11. The system of any preceding claim, wherein the attention layers are implemented as reversible layers.

12. The system of claim 11 when also dependent on at least claims 4 and 9, wherein the residual connection includes a first reversible swap after the first attention mechanism, a second reversible swap after the second attention mechanism, and a third reversible swap after the feed-forward sub-layer.

13. The system of any preceding claim, wherein the attention layer further comprises a recurrent block configured to process the attended input sequence to generate an updated attended sequence, wherein generating the layer output comprises generating the layer output from the updated attended sequence and the transformed outputs generated by the feed-forward sub-layer.

14. A method comprising:
receiving a network input; and
processing the network input using the attention neural network of claim 1 to generate a network output for the network input.

## Patentansprüche

1. System (100) zum Durchführen einer Maschinenlernaufgabe an einer Netzwerkeingabe (102), um eine Netzwerkausgabe (152) zu erzeugen, wobei das System einen oder mehrere Computer und eine oder mehrere Speichervorrichtungen umfasst, die Anweisungen speichern, die, wenn sie von dem einen oder den mehreren Computern ausgeführt werden, den einen oder die mehreren Computer veranlassen, Folgendes zu implementieren:
ein neuronales Aufmerksamkeitsnetzwerk (150), das konfiguriert ist, die Maschinenlernaufgabe durchzuführen, wobei das neuronale Aufmerksamkeitsnetzwerk eine Mehrzahl von Aufmerksamkeitsschichten (110) umfasst, wobei jede Aufmerksamkeitsschicht eine Aufmerksamkeitsteilschicht (120) und eine Vorwärtskopplungsteilschicht (200) umfasst;
wobei die Aufmerksamkeitsteilschicht (120) konfiguriert ist zum: Erhalten einer Eingabesequenz (104) für die Aufmerksamkeitsschicht, wobei die Eingabesequenz (104) für die Aufmerksamkeitsschicht eine jeweilige Schichteingabe an jeder von einer oder mehreren Positionen umfasst; und
Erzeugen einer aufmerksamkeitsgewichteten Eingabesequenz (124) zumindest teilweise durch Anwenden eines oder mehrerer Aufmerksamkeitsmechanismen auf die Eingabesequenz für die Aufmerksamkeitsschicht, wobei die aufmerksamkeitsgewichtete Eingabesequenz eine jeweilige aufmerksamkeitsgewichtete Schichteingabe (202) an jeder der einen oder mehreren Positionen umfasst; und
wobei die Vorwärtskopplungsteilschicht (200) konfiguriert ist zum:
Empfangen der aufmerksamkeitsgewichteten Eingabesequenz (124); und
Erzeugen einer Ausgabesequenz (134) für die Aufmerksamkeitsschicht aus zumindest der aufmerksamkeitsgewichteten Eingabesequenz (124), wobei die Ausgabesequenz (134) eine jeweilige Schichtausgabe an jeder der einen oder mehreren Positionen umfasst;
wobei Erzeugen der Ausgabesequenz (134) für die Aufmerksamkeitsschicht für jede der Positionen Folgendes umfasst: Erhalten (452) einer aufmerksamkeitsgewichteten Schichteingabe (202) an der Position;
Auswählen (454), basierend auf der aufmerksamkeitsgewichteten Schichteingabe (202), und Beschränken einer echten Teilmenge von Elementen in einer Zwischenausgabe (220), wobei die Elemente in der echten Teilmenge beschränkt sind, einen Nullwert aufzuweisen, wobei die anderen Elemente der aufmerksamkeitsgewichteten Schichteingabe (202), die nicht in der echten Teilmenge sind, nicht beschränkt sind, einen Nullwert aufzuweisen;
Verarbeiten (456) der aufmerksamkeitsgewichteten Schichteingabe (202) durch eine Vorwärtskopplungsneuronalnetzwerkschicht, um die Zwischenausgabe (220) zu erzeugen, während die Elemente in der echten Teilmenge beschränkt werden, einen Nullwert aufzuweisen, wobei das Verarbeiten der aufmerksamkeitsgewichteten Schichteingabe Berechnen eines Produkts zwischen der aufmerksamkeitsgewichteten Schichteingabe (202) und einer Gewichtsmatrix (209) der Vorwärtskopplungsneuronalnetzwerkschicht unter Verwendung nur von Spalten der Gewichtsmatrix (209) der Vorwärtskopplungsneuronalnetzwerkschicht, die den Elementen der Zwischenausgabe entsprechen, die nicht beschränkt sind, null zu sein, umfasst, wobei das Berechnen eines Produkts Laden nur der Spalten der Gewichtsmatrix der Vorwärtskopplungsneuronalnetzwerkschicht, die den Elementen der Zwischenausgabe (220) entsprechen, die nicht beschränkt sind, null zu sein, aus dem Speicher umfasst;
Anwenden (458) einer linearen Transformation auf die Zwischenausgabe (220), um eine transformierte Ausgabe (232) zu erzeugen; und
Erzeugen (460) der Schichtausgabe an der Position aus der transformierten Ausgabe (232);
wobei die Elemente der Zwischenausgaben in eine Mehrzahl von Blöcken partitioniert sind und wobei das Auswählen, basierend auf der aufmerksamkeitsgewichteten Schichteingabe, und das Beschränken der echten Teilmenge von Elementen Folgendes umfasst: Projizieren der aufmerksamkeitsgewichteten Schichteingabe unter Verwendung einer erlernten Transformation, um eine projizierte Schichteingabe (272) zu erzeugen, die dieselbe Dimensionalität wie die Zwischenausgabe (220) aufweist; und
für jeden Block der projizierten Schichteingabe, Auswählen des Elements mit dem höchsten Wert jedes Elements in dem Block und Beschränken jedes Elements in dem entsprechenden Block in der Zwischenausgabe, das nicht das dem ausgewählten Element entsprechende Element ist, einen Nullwert aufzuweisen.

2. System nach Anspruch 1, wobei die erlernte Transformation eine niedrigrangige dichte Engpassschicht ist, in der die Vorwärtskopplungsteilschicht (200) ein Produkt zwischen der aufmerksamkeitsgewichteten Schichteingabe (202) und einer ersten niedrigrangigen Matrix (260) berechnet, um eine Engpassdarstellung (262) zu erzeugen, und dann ein Produkt zwischen der Engpassdarstellung (262) und einer zweiten niedrigrangigen Matrix (270) berechnet, um die projizierte Schichteingabe (272) zu erzeugen, die dieselbe Dimensionalität wie die Zwischenausgabe (220) aufweist.

3. System nach einem der vorhergehenden Ansprüche, wobei Anwenden einer linearen Transformation auf die Zwischenausgabe, um eine transformierte Ausgabe zu erzeugen, Folgendes umfasst: Berechnen eines Produkts zwischen einer Gewichtsmatrix der linearen Transformation (230) und der Zwischenausgabe unter Verwendung nur von Zeilen der Gewichtsmatrix der linearen Transformation, die den Elementen der Zwischenausgabe entsprechen, die nicht beschränkt sind, null zu sein, wobei Berechnen eines Produkts zwischen einer Gewichtsmatrix der linearen Transformation und der Zwischenausgabe unter Verwendung nur von Zeilen der Gewichtsmatrix der linearen Transformation, die den Elementen der Zwischenausgabe entsprechen, die nicht beschränkt sind, null zu sein, optional Folgendes umfasst:
Laden nur der Zeilen der Gewichtsmatrix der linearen Transformation, die den Elementen der Zwischenausgaben entsprechen, die nicht beschränkt sind, null zu sein, aus dem Speicher.

4. System nach einem der vorhergehenden Ansprüche, wobei Erzeugen der Schichtausgabe aus der transformierten Ausgabe Folgendes umfasst:
Anwenden einer Restverbindung, einer Schichtnormalisierung oder von beidem auf die transformierten Ausgaben an den Positionen, um die Schichtausgaben in der Ausgabesequenz zu erzeugen.

5. System nach einem der vorhergehenden Ansprüche, wobei ein erster Aufmerksamkeitsmechanismus (317) des einen oder der mehreren Aufmerksamkeitsmechanismen ein Mehrkopfaufmerksamkeitsmechanismus ist, der eine Mehrzahl von Aufmerksamkeitsköpfen aufweist, die jeweils Anfrage-Schlüssel-Wert-Aufmerksamkeit anwenden, und wobei die Aufmerksamkeitsteilschicht konfiguriert ist zum:
Verarbeiten der jeweiligen Schichteingaben in der Eingabesequenz unter Verwendung einer multiplikativen dichten Schicht (332), um für jede jeweilige Schichteingabe eine jeweilige aufgeteilte Eingabe zu erzeugen, die S Module der Größe M umfasst, wobei S und M beide ganze Zahlen größer als 1 sind;
Verarbeiten eines Tensors, der die jeweiligen aufgeteilten Eingaben für die jeweiligen Schichteingaben in der Sequenz umfasst, unter Verwendung einer ersten zweidimensionalen Faltungsschicht (334), um einen jeweiligen Satz von Anfragen für jeden Aufmerksamkeitskopf zu erzeugen;
Verarbeiten des Tensors unter Verwendung einer zweiten zweidimensionalen Faltungsschicht (336), um einen jeweiligen Satz von Werten für jeden Aufmerksamkeitskopf zu erzeugen;
Verarbeiten des Tensors unter Verwendung einer dritten zweidimensionalen Faltungsschicht (338), um einen jeweiligen Satz von Schlüsseln für jeden Aufmerksamkeitskopf zu erzeugen; für jeden Aufmerksamkeitskopf, Anwenden von Anfrage-Schlüssel-Wert-Aufmerksamkeit über die jeweiligen Sätze von Anfragen, Schlüsseln und Werten für den Aufmerksamkeitskopf, um eine aufmerksamkeitsgewichtete Ausgabe zu erzeugen; und
Kombinieren der aufmerksamkeitsgewichteten Ausgaben der Aufmerksamkeitsköpfe, wobei die von der multiplikativen dichten Schicht durchgeführten Operationen optional jede beliebige Permutation auf jeder gegebenen Schichteingabe darstellen können.

6. System nach Anspruch 5, wobei S gleich der Anzahl der Aufmerksamkeitsköpfe ist, M gleich der Dimensionalität der Anfragen, Schlüssel und Werte ist und die erste, zweite und dritte Faltungsschicht jeweils M Filter mit einer Kerngröße von KxK aufweisen, die über eine Längendimension des Tensors gefaltet werden, die der Anzahl der Schichteingaben in der Eingabesequenz entspricht.

7. System nach einem der vorhergehenden Ansprüche, wobei das neuronale Aufmerksamkeitsnetzwerk einen Encoder, der codierte Aktivierungen erzeugt, die die Netzwerkeingabe repräsentieren, und einen Decoder umfasst, der eine erste Teilmenge der Mehrzahl von Aufmerksamkeitsschichten beinhaltet und die Netzwerkausgabe aus den codierten Aktivierungen erzeugt, wobei der Encoder optional eine zweite Teilmenge der Mehrzahl von Aufmerksamkeitsschichten beinhaltet.

8. System nach Anspruch 7, wobei der Decoder die Netzwerkausgabe erzeugt, indem er jedes Element der Netzwerkausgabe autoregressiv erzeugt, und wobei für jede Aufmerksamkeitsschicht in dem Decoder die Eingabesequenz eine aus den codierten Aktivierungen abgeleitete Sequenz, gefolgt von einer aus beliebigen Elementen der Netzwerkausgabe, die bereits erzeugt worden sind, abgeleiteten Sequenz, beinhaltet, wobei die ein oder mehreren Aufmerksamkeitsmechanismen, die durch die Aufmerksamkeitsteilschicht jeder der Aufmerksamkeitsschichten in dem Decoder angewendet werden, optional maskierte Selbstaufmerksamkeitsmechanismen sind.

9. System nach einem der Ansprüche 7 oder 8, wobei für jede Aufmerksamkeitsschicht in dem Decoder die Aufmerksamkeitsteilschicht konfiguriert ist zum:
Erzeugen, aus der Eingabesequenz, einer anfänglich aufmerksamkeitsgewichteten Eingabesequenz zumindest teilweise durch Anwenden eines ersten Aufmerksamkeitsmechanismus (510) auf zumindest einen Abschnitt der Eingabesequenz für die Aufmerksamkeitsschicht; und
Erzeugen, aus der anfänglich aufmerksamkeitsgewichteten Eingabesequenz, der aufmerksamkeitsgewichteten Eingabesequenz zumindest teilweise durch Anwenden eines zweiten Aufmerksamkeitsmechanismus (520) auf zumindest einen Abschnitt der anfänglich aufmerksamkeitsgewichteten Eingabesequenz, wobei Erzeugen der aufmerksamkeitsgewichteten Eingabesequenz optional Anwenden von Schichtnormalisierung (530) auf die anfänglich aufmerksamkeitsgewichtete Eingabesequenz vor dem Anwenden des zweiten Aufmerksamkeitsmechanismus umfasst.

10. System nach einem der vorhergehenden Ansprüche, wobei Erhalten der Eingabesequenz für die Aufmerksamkeitsschicht Anwenden von Schichtnormalisierung (540) auf eine anfängliche Eingabesequenz für die Aufmerksamkeitsschicht umfasst.

11. System nach einem der vorhergehenden Ansprüche, wobei die Aufmerksamkeitsschichten als reversible Schichten implementiert sind.

12. System nach Anspruch 11, wenn auch abhängig von zumindest den Ansprüchen 4 und 9, wobei die Restverbindung einen ersten reversiblen Tausch nach dem ersten Aufmerksamkeitsmechanismus, einen zweiten reversiblen Tausch nach dem zweiten Aufmerksamkeitsmechanismus und einen dritten reversiblen Tausch nach der Vorwärtskopplungsteilschicht beinhaltet.

13. System nach einem der vorhergehenden Ansprüche, wobei die Aufmerksamkeitsschicht ferner einen rekurrenten Block umfasst, der konfiguriert ist, die aufmerksamkeitsgewichtete Eingabesequenz zu verarbeiten, um eine aktualisierte aufmerksamkeitsgewichtete Sequenz zu erzeugen, wobei Erzeugen der Schichtausgabe Erzeugen der Schichtausgabe aus der aktualisierten aufmerksamkeitsgewichteten Sequenz und den durch die Vorwärtskopplungsteilschicht erzeugten transformierten Ausgaben umfasst.

14. Verfahren, umfassend:
Empfangen einer Netzwerkeingabe; und
Verarbeiten der Netzwerkeingabe unter Verwendung des neuronalen Aufmerksamkeitsnetzwerks nach Anspruch 1, um eine Netzwerkausgabe für die Netzwerkeingabe zu erzeugen.

## Revendications

1. Système (100) destiné à réaliser une tâche d'apprentissage automatique sur une entrée de réseau (102) pour générer une sortie de réseau (152), le système comprenant un ou plusieurs ordinateurs et un ou plusieurs dispositifs de stockage stockant des instructions qui, lorsqu'elles sont exécutées par les un ou plusieurs ordinateurs, amènent les un ou plusieurs ordinateurs à mettre en œuvre :
un réseau neuronal d'attention (150) configuré pour réaliser la tâche d'apprentissage automatique, le réseau neuronal d'attention comprenant une pluralité de couches d'attention (110), chaque couche d'attention comprenant une sous-couche d'attention (120) et une sous-couche de propagation avant (200) ;
dans lequel la sous-couche d'attention (120) est configurée pour :
obtenir une séquence d'entrée (104) pour la couche d'attention, la séquence d'entrée (104) pour la couche d'attention comprenant une entrée de couche respective à chacune d'une ou plusieurs positions ; et
générer une séquence d'entrée ayant fait l'objet d'une attention (124) au moins en partie en appliquant un ou plusieurs mécanismes d'attention à la séquence d'entrée de couche d'attention, la séquence d'entrée ayant fait l'objet d'une attention comprenant une entrée de couche ayant fait l'objet d'une attention respective (202) à chacune des une ou plusieurs positions ; et
dans lequel la sous-couche de propagation avant (200) est configurée pour :
recevoir la séquence d'entrée ayant fait l'objet d'une attention (124) ; et
générer une séquence de sortie (134) pour la couche d'attention à partir d'au moins la séquence d'entrée ayant fait l'objet d'une attention (124), la séquence de sortie (134) comprenant une sortie de couche respective à chacune des une ou plusieurs positions ;
dans lequel la génération de la séquence de sortie (134) pour la couche d'attention comprend, pour chacune des positions :
l'obtention (452) d'une entrée de couche ayant fait l'objet d'une attention (202) à la position ;
la sélection (454), sur la base de l'entrée de couche ayant fait l'objet d'une attention (202), et le fait de contraindre un sous-ensemble approprié d'éléments dans une sortie intermédiaire (220), les éléments du sous-ensemble approprié étant contraints d'avoir une valeur nulle, dans lequel les autres éléments de l'entrée de couche ayant fait l'objet d'une attention (202) qui ne font pas partie du sous-ensemble approprié ne sont pas contraints d'avoir une valeur nulle ;
le traitement (456) de l'entrée de couche ayant fait l'objet d'une attention (202) à travers une couche de réseau neuronal à propagation avant pour générer la sortie intermédiaire (220) tout en contraignant les éléments du sous-ensemble approprié à avoir une valeur nulle, le traitement de l'entrée de couche ayant fait l'objet d'une attention comprenant le calcul d'un produit entre l'entrée de couche ayant fait l'objet d'une attention (202) et une matrice de poids (209) de la couche de réseau neuronal à propagation avant en utilisant uniquement les colonnes de la matrice de poids (209) de la couche de réseau neuronal à propagation avant qui correspondent aux éléments de la sortie intermédiaire qui ne sont pas contraints d'être nuls, le calcul d'un produit comprenant le chargement en mémoire uniquement des colonnes de la matrice de poids de la couche de réseau neuronal à propagation avant qui correspondent aux éléments de la sortie intermédiaire (220) qui ne sont pas contraints d'être nuls ;
l'application (458) d'une transformation linéaire à la sortie intermédiaire (220) pour générer une sortie transformée (232) ; et
la génération (460) de la sortie de couche à la position de la sortie transformée (232) ;
dans lequel les éléments des sorties intermédiaires sont répartis en une pluralité de blocs et dans lequel la sélection, sur la base de l'entrée de couche ayant fait l'objet d'une attention, et le fait de contraindre le sous-ensemble approprié d'éléments comprennent :
la projection de l'entrée de couche ayant fait l'objet d'une attention à l'aide d'une transformation apprise pour générer une entrée de couche projetée (272) qui a la même dimensionnalité que la sortie intermédiaire (220) ; et
pour chaque bloc de l'entrée de couche projetée, la sélection de l'élément ayant la valeur la plus élevée de tous les éléments du bloc et le fait de contraindre chaque élément du bloc correspondant dans la sortie intermédiaire, autre que l'élément correspondant à l'élément sélectionné, à avoir une valeur nulle.

2. Système selon la revendication 1, dans lequel la transformation apprise est une couche dense à goulot d'étranglement de faible rang, dans laquelle la sous-couche de propagation avant (200) calcule un produit entre l'entrée de couche ayant fait l'objet d'une attention (202) et une première matrice de faible rang (260) pour générer une représentation à goulot d'étranglement (262), puis calcule un produit entre la représentation à goulot d'étranglement (262) et une seconde matrice de faible rang (270) pour générer l'entrée de couche projetée (272) qui a la même dimensionnalité que la sortie intermédiaire (220).

3. Système selon une quelconque revendication précédente, dans lequel l'application d'une transformation linéaire à la sortie intermédiaire pour générer une sortie transformée comprend :
le calcul d'un produit entre une matrice de poids de la transformation linéaire (230) et la sortie intermédiaire en utilisant uniquement les lignes de la matrice de poids de la transformation linéaire qui correspondent aux éléments de la sortie intermédiaire qui ne sont pas contraints d'être nuls, dans lequel le calcul d'un produit entre une matrice de poids de la transformation linéaire et la sortie intermédiaire en utilisant uniquement les lignes de la matrice de poids de la transformation linéaire qui correspondent aux éléments de la sortie intermédiaire qui ne sont pas contraints d'être nuls comprend éventuellement :
le chargement en mémoire uniquement des lignes de la matrice de poids de la transformation linéaire qui correspondent aux éléments des sorties intermédiaires qui ne sont pas contraintes d'être nuls.

4. Système selon une quelconque revendication précédente, dans lequel la génération de la sortie de couche à partir de la sortie transformée comprend :
l'application d'une connexion résiduelle, d'une normalisation de couche, ou les deux, aux sorties transformées aux positions pour générer les sorties de couche dans la séquence de sortie.

5. Système selon une quelconque revendication précédente, dans lequel un premier mécanisme d'attention (317) parmi les un ou plusieurs mécanismes d'attention est un mécanisme d'attention multi-têtes comportant une pluralité de têtes d'attention qui appliquent chacune une attention requête-clé-valeur, et dans lequel la sous-couche d'attention est configurée pour :
traiter les entrées de couche respectives dans la séquence d'entrée en utilisant une couche dense multiplicative (332) pour générer, pour chaque entrée de couche respective, une entrée divisée respective comprenant S modules de taille M, où S et M sont tous deux des entiers supérieurs à 1 ;
traiter un tenseur comprenant les entrées divisées respectives pour les entrées de couche respectives dans la séquence en utilisant une première couche convolutionnelle bidimensionnelle (334) pour générer un ensemble respectif de requêtes pour chaque tête d'attention ;
traiter le tenseur en utilisant une deuxième couche convolutionnelle bidimensionnelle (336) pour générer un ensemble respectif de valeurs pour chaque tête d'attention ;
traiter le tenseur en utilisant une troisième couche convolutionnelle bidimensionnelle (338) pour générer un ensemble respectif de clés pour chaque tête d'attention ;
pour chaque tête d'attention, appliquer l'attention requête-clé-valeur aux ensembles respectifs de requêtes, de clés et de valeurs pour que la tête d'attention génère une sortie ayant fait l'objet d'une attention ; et
combiner les sorties ayant fait l'objet d'une attention des têtes d'attention, dans lequel les opérations réalisées par la couche dense multiplicative peuvent éventuellement représenter une quelconque permutation arbitraire sur une quelconque entrée de couche donnée.

6. Système selon la revendication 5, dans lequel S est égal au nombre de têtes d'attention, M est égal à la dimensionnalité des requêtes, des clés et des valeurs, et les première, deuxième et troisième couches convolutionnelles ont chacune M filtres avec une taille de noyau de KxK qui sont convolués sur une dimension de longueur du tenseur qui correspond au nombre d'entrées de couche dans la séquence d'entrée.

7. Système selon une quelconque revendication précédente, dans lequel le réseau neuronal d'attention comprend un encodeur qui génère des activations encodées représentant l'entrée de réseau et un décodeur qui comporte un premier sous-ensemble de la pluralité de couches d'attention et génère la sortie de réseau à partir des activations encodées, dans lequel l'encodeur comprend éventuellement un second sous-ensemble de la pluralité de couches d'attention.

8. Système selon la revendication 7, dans lequel le décodeur génère la sortie de réseau en générant chaque élément de la sortie de réseau de manière autorégressive et dans lequel, pour chaque couche d'attention du décodeur, la séquence d'entrée comporte une séquence dérivée des activations encodées suivie d'une séquence dérivée d'un quelconque élément de la sortie de réseau qui a déjà été généré, dans lequel les un ou plusieurs mécanismes d'attention appliqués par la sous-couche d'attention de chacune des couches d'attention du décodeur sont des mécanismes d'auto-attention éventuellement masqués.

9. Système selon l'une quelconque des revendications 7 ou 8, dans lequel, pour chaque couche d'attention du décodeur, la sous-couche d'attention est configurée pour :
générer, à partir de la séquence d'entrée, une séquence d'entrée initiale ayant fait l'objet d'une attention, au moins en partie en appliquant un premier mécanisme d'attention (510) à au moins une partie de la séquence d'entrée pour la couche d'attention ; et
générer, à partir de la séquence d'entrée initiale ayant fait l'objet d'une attention, la séquence d'entrée ayant fait l'objet d'une attention au moins en partie en appliquant un second mécanisme d'attention (520) à au moins une partie de la séquence d'entrée initiale ayant fait l'objet d'une attention, dans lequel la génération de la séquence d'entrée ayant fait l'objet d'une attention comprend éventuellement l'application d'une normalisation de couche (530) à la séquence d'entrée initiale ayant fait l'objet d'une attention avant d'appliquer le second mécanisme d'attention.

10. Système selon une quelconque revendication précédente, dans lequel l'obtention de la séquence d'entrée pour la couche d'attention comprend l'application d'une normalisation de couche (540) à une séquence d'entrée initiale pour la couche d'attention.

11. Système selon une quelconque revendication précédente, dans lequel les couches d'attention sont mises en œuvre comme des couches réversibles.

12. Système selon la revendication 11, lorsqu'il dépend également d'au moins les revendications 4 et 9, dans lequel la connexion résiduelle comporte un premier échange réversible après le premier mécanisme d'attention, un deuxième échange réversible après le second mécanisme d'attention et un troisième échange réversible après la sous-couche de propagation avant.

13. Système selon une quelconque revendication précédente, dans lequel la couche d'attention comprend en outre un bloc récurrent configuré pour traiter la séquence d'entrée ayant fait l'objet d'une attention afin de générer une séquence ayant fait l'objet d'une attention mise à jour, dans lequel la génération de la sortie de couche comprend la génération de la sortie de couche à partir de la séquence ayant fait l'objet d'une attention mise à jour et des sorties transformées générées par la sous-couche de propagation avant.

14. Procédé comprenant :
la réception d'une entrée de réseau ; et
le traitement de l'entrée de réseau à l'aide du réseau neuronal d'attention selon la revendication 1 pour générer une sortie de réseau pour l'entrée de réseau.
